# EUROPÄISCHE PATENTSCHRIFT

(11) **EP 3 035 010 B1**
(45) Veröffentlichungstag und Bekanntmachung des Hinweises auf die Patenterteilung: **11.04.2018**
(21) Anmeldenummer: 14198153.0
(22) Anmeldetag: 16.12.2014
(51) Int. Cl.: G01F 23/00, G01W 1/10, G01W 1/14

(54) **Wetterdatenabhängige Füllstandsensorabfrage**
Level sensor query depending on weather data
Interrogation du capteur de niveau en fonction des données météorologiques

(43) Veröffentlichungstag der Anmeldung: 22.06.2016
(73) Patentinhaber: VEGA Grieshaber KG, 77709 Wolfach (DE)
(72) Erfinder: Kech, Günter, 77709 Wolfach (DE)
(74) Vertreter: Maiwald Patentanwalts GmbH

(56) Entgegenhaltungen:
- WO-A1-2009/082473
- DE-A1- 3 239 920
- US-A- 2 906 026
- US-A- 5 239 203
- Xiuhong Li ET AL: "Design and Implementation of a Wireless Sensor Network-Based Remote Water-Level Monitoring System", Sensors, vol. 11, no. 12, 1 December 2011 (2011-12-01), pages 1706-1720, XP055405874, CH ISSN: 1424-8220, DOI: 10.3390/s110201706
- GYOO-BUM KIM ET AL: "Case study for determination of a water level monitoring frequency for nationwide groundwater monitoring networks in Korea", JOURNAL OF HYDROLOGY, ELSEVIER, AMSTERDAM, NL, vol. 342, no. 3-4, 28 July 2007 (2007-07-28), pages 223-237, XP022174403, ISSN: 0022-1694, DOI: 10.1016/J.JHYDROL.2007.05.034
- "IDS Smart Tide Gauge", BROSCHÜRE, 16 April 2013 (2013-04-16), XP055406040,

## Beschreibung

### Gebiet der Erfindung

Die Erfindung betrifft die Distanz- und Füllstandmessung. Insbesondere betrifft die Erfindung eine Messgeräteanordnung mit einem Messgerät zum Messen eines Abstands zu einem Objekt, ein Verfahren zum Messen eines Abstands eines Messgeräts zu einem Objekt, ein Programmelement und ein computerlesbares Medium.

### Technischer Hintergrund

Bei Pegelstandmessungen fließender oder stehender Gewässer oder sonstigen Füllstand- oder Abstandmessungen, wie der Schneehöhenmessung im Gebirge, werden oft Messgeräte (Sensoren) mit Batterie- oder Akkuversorgung verwendet, da die Energieversorgung über ein Kabel meist nicht möglich oder zumindest nicht vorgesehen ist.

Um die begrenzt vorhandene Energie über einen möglichst langen Zeitraum nutzen zu können, können die Zeiten zwischen zwei aufeinanderfolgenden Messungen verlängert werden. So genügt es üblicherweise, den Pegelstand eines Flusses einmal täglich zu messen. Rasche Änderungen des Pegelstands werden in diesem Falle jedoch unter Umständen erst mit mehrstündiger Verzögerung gemessen und der Leitstelle gemeldet.

US 2 906 026 A beschreibt ein Füllstandmessgerät mit einem Füllstandbehälter.

DE 32 39 920 A1 beschreibt ein Verfahren zum Messen der Menge von am Boden von Mülldeponien abfließender verunreinigter Flüssigkeit sowie eine Einrichtung zu seiner Durchführung.

### Zusammenfassung der Erfindung

Es ist eine Aufgabe der Erfindung, den Energieverbrauch von Füllstand- oder Pegelstandmessgeräten gering zu halten und gleichzeitig den aktuellen Füll- bzw. Pegelstand mit möglichst geringer zeitlicher Verzögerung zu messen.

Diese Aufgabe wird durch die Gegenstände der unabhängigen und nebengeordneten Patentansprüche gelöst. Weiterbildungen der Erfindung ergeben sich aus den Unteransprüchen sowie der folgenden Beschreibung von Aspekten in Ausführungsformen.

Die Erfindung ist in den Patentansprüchen definiert. Insbesondere betrifft die vorliegende Erfindung eine Messgeräteanordnung mit einem Messgerät zur Bestimmung eines Füllstandes oder eines Pegels eines Mediums, wie in Patentanspruch 1 angegeben, ein Verfahren zum Messen eines Füllstandes oder Pegels eines Mediums, wie in Patentanspruch 8 angegeben, ein Programmelement, wie in Patentanspruch 9 angegeben, und ein computerlesbares Medium, wie in Patentanspruch 10 angegeben.

Ein Aspekt der Offenbarung betrifft eine Messgeräteanordnung mit einem Messgerät zum Messen eines Abstands zu einem Objekt, zum Messen eines Durchflusses oder eines Drucks. Bei der Messgeräteanordnung kann es sich beispielsweise um ein umfassendes Messsystem handeln, welches neben dem eigentlichen Messgerät noch weitere Einrichtungen aufweist, wie eine Leitstelle oder Zentrale und einen Wetterdienst.
Bei dem Messgerät handelt es sich beispielsweise um ein Füllstandmessgerät, ein Durchflussmessgerät, ein Druckmessgerät oder ein Pegelmessgerät zum Bestimmen des Füllstands oder des Pegels eines Mediums, also insbesondere eines stehenden Gewässers, eines fließenden Gewässers oder von Schnee. Bei dem Messgerät kann es sich um ein berührungsfrei messendes Messgerät, beispielsweise ein Füllstandradar, handeln oder aber auch um ein nicht-berührungsfrei messendes Messgerät, welches beispielsweise einen Wellenleiter oder einen Resonator verwendet, der in das Medium hineinragt.
Die Messgeräteanordnung weist eine oder mehrere Steuereinheiten auf. Zumindest eine dieser Steuereinheiten ist zum Berechnen eines Zeitpunkts für eine nächste Messung des Abstands ausgeführt, wobei die Berechnung des Zeitpunkts unter Berücksichtigung einer aktuellen und/oder einer prognostizierten Wetterinformation, die das Wetter am Ort des Messgeräts betrifft, erfolgt.
Auch können bei der Berechnung des Zeitpunkts für die nächste Messung/die Berechnung der Zeitpunkte für die nächsten Messungen auch weitere Informationen Berücksichtigung finden, wie beispielsweise der Zeitpunkt, an dem eine Staustufe geöffnet wird (also Wasser abgelassen wird) oder eine Lawinensprengung vorgenommen werden soll.
Die Steuereinheit, welche den Zeitpunkt für die nächste Messung des Abstands berechnet, kann beispielsweise in dem Messgerät selber integriert sein. Es kann aber auch vorgesehen sein, dass diese Steuereinheit in einem anderen Gerät integriert ist, beispielsweise in einer entfernt vom Messgerät angeordneten Leitstelle, die mit dem Messgerät kommunikativ verbindbar ist (beispielsweise über eine Funkschnittstelle).
Die Steuereinheit kann auch in einer Wetterstation oder in einem System an Wetterstationen integriert sein, wobei in diesem Fall die Wetterstation bzw. das System an Wetterstationen zur Kommunikation mit dem Messgerät und/oder der Leitstelle ausgeführt ist, um die aktuelle und/oder prognostizierte Wetterinformation an das Messgerät oder die Leitstelle bereitzustellen.

Somit ist es beispielsweise möglich, dass die Wetterstation die Wetterprognose an die Leitstelle übermittelt und diese daraufhin den passenden Zeitpunkt für eine zukünftige Abstandsmessung oder sogar mehrere passende Zeitpunkte für zukünftige Abstandsmessungen berechnet und an das Messgerät übermittelt. Somit kann die erforderliche Rechenleistung im Messgerät reduziert und gleichzeitig der Datentransfer zwischen dem Messgerät und der Leitstelle verringert werden. Insbesondere ist es auf diese Weise möglich, dass die Leitstelle dem Messgerät einen kompletten Messzyklus vorgibt, der die nächsten Tage zu befolgen ist. Es kann vorgesehen sein, dass das Messgerät diesen Messzyklus modifiziert, wenn sie beispielsweise die äußeren Umstände ändern, bzw. nicht so eintreten, wie dies von der Wettervorhersage prognostiziert wurde.

Gemäß einer Ausführungsform berücksichtigt die Steuereinheit für das Berechnen des Zeitpunkts für die nächste Messung des Abstands neben der aktuellen und/oder prognostizierten Wetterinformation auch eine Historie vergangener, vom Messgerät durchgeführter Abstandsmessungen.
So kann sich allein aus der Historie vergangener Abstandsmessungen ergeben, dass die Messfrequenz erhöht oder verringert werden muss, dass also der zeitliche Abstand zwischen zukünftigen Messungen verringert bzw. vergrößert werden muss, um Abstandsänderungen (wie Pegelstandänderungen, etc.) ausreichend frühzeitig erfassen zu können.
Gemäß einer weiteren Ausführungsform der Erfindung ist die Steuereinheit des Messgeräts zum Bestimmen eines Zeitpunkts für die Übertragung von Messdaten an die Leitstelle unter Berücksichtigung der aktuellen oder prognostizierten Wetterinformation ausgeführt. Hierbei wird erfindungsgemäß auch die zeitliche Änderung des Abstands des Objekts zum Messgerät berücksichtigt. Der Zeitpunkt für die Übertragung der Messdaten korreliert hierbei nicht zwingend mit dem Zeitpunkt der letzten Messung. Vielmehr kann die Berücksichtigung der Wetterinformationen und ggf. der Historie vergangener, vom Messgerät durchgeführter Abstandsmessungen sowie der Änderungsrate des Abstands ergeben, dass zum jetzigen Zeitpunkt keine Messwertübertragung an die Leitstelle notwendig ist, da sich der Pegel nicht oder nur geringfügig geändert hat. Auf diese Weise kann der Datentransfer zwischen Messgerät und Leitstelle weiter reduziert werden.

Ein Aspekt betrifft ein Verfahren zum Messen eines Abstands eines Messgeräts zu einem Objekt, bei dem ein Zeitpunkt für die nächste Messung des Abstands unter Berücksichtigung einer aktuellen oder prognostizierten Wetterinformation, die das Wetter am Ort des Messgeräts betrifft, berücksichtigt wird.

Ein Aspekt betrifft ein Programmelement, das, wenn es auf einer Steuereinheit einer Messgeräteanordnung, wie sie oben beschrieben wurde, ausgeführt wird, die Steuereinheit anleitet, das oben und im Folgenden beschriebene Verfahren durchzuführen.

Ein Aspekt betrifft ein computerlesbares Medium, auf das das oben beschriebene Programmelement gespeichert ist.

An dieser Stelle sei darauf hingewiesen, dass die oben und im Folgenden im Hinblick auf die Messgeräteanordnung beschriebenen Merkmale auch als Verfahrensschritte implementiert werden können und dass die Messgeräteanordnung ausgeführt sein kann, sämtliche oben und im Folgenden beschriebenen Verfahrensschritte durchzuführen.

Im Folgenden werden mit Verweis auf die Figuren beispielhafte Ausführungsformen beschrieben.

### Kurze Beschreibung der Figuren

Fig. 1 zeigt einen Teil einer Messgeräteanordnung gemäß einer beispielhaften Ausführungsform.
Fig. 2 zeigt eine Messgeräteanordnung gemäß einer weiteren beispielhaften Ausführungsform.
Fig. 3 zeigt ein Flussdiagramm eines Verfahrens gemäß einer beispielhaften Ausführungsform.
Fig. 4 zeigt eine Messgeräteanordnung gemäß einer weiteren beispielhaften Ausführungsform.
Fig. 5 zeigt eine Messgeräteanordnung gemäß einer weiteren beispielhaften Ausführungsform.

### Detaillierte Beschreibung von beispielhaften Ausführungsformen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

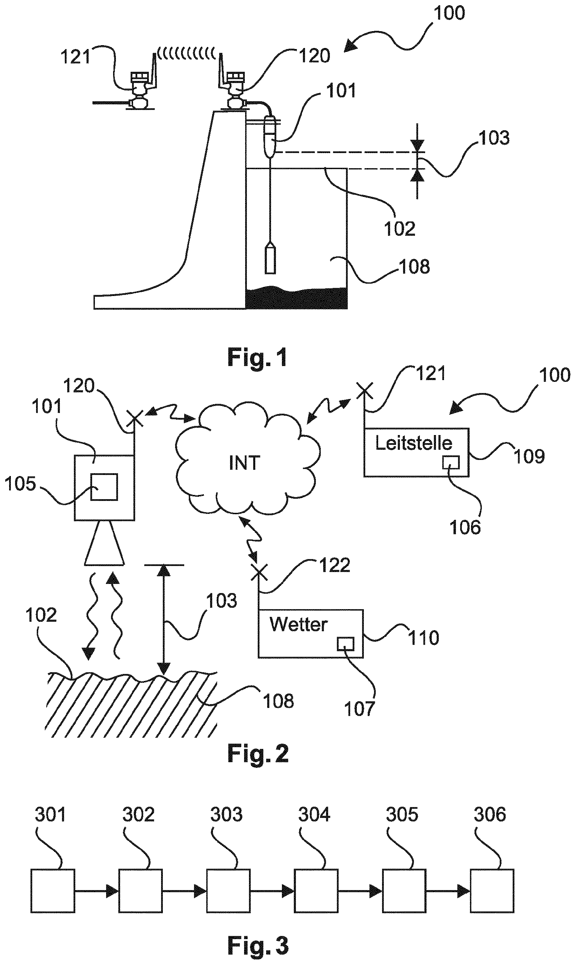

Fig. 1 zeigt eine Messgeräteanordnung 100 gemäß einer beispielhaften Ausführungsform. Die Messgeräteanordnung 100 weist ein TDR-Messgerät 101 zum Messen eines Abstands 103 zur Oberfläche 102 eines stehenden oder fließenden Gewässers 108 auf. Das Messgerät 101 ist an eine Kommunikationseinheit 120 angeschlossen, welche mit einer entsprechenden Kommunikationseinheit 121 drahtlos (oder drahtgebunden) kommunizieren kann, um Daten zwischen dem Messgerät 101 und einer Leitstelle 109 (siehe Fig. 2) auszutauschen.

Das Messgerät 101 kann alternativ auch als Druckmessgerät ausgebildet sein, oder als Durchflussmessgerät zur Messung des Durchflusses durch eine Rohrleitung.

Das Messgerät 101 weist eine Steuereinheit 105 (siehe ebenfalls Fig. 2) auf, welche zum Berechnen eines Zeitpunkts für die nächste "Abstandsmessung", bei der es sich im Falle der Fig. 1 um eine Pegelstandmessung handelt. Dieser Zeitpunkt wird unter Berücksichtigung von Wetterinformationen am Ort des Messgeräts berechnet.

Zusätzlich oder alternativ zur Wetterinformation, die den Ort, an dem das Messgerät installiert ist, betrifft, kann auch eine Wetterinformation Berücksichtigung finden, die das Wetter an einem entfernten Ort betrifft, beispielsweise stromaufwärts des Messgeräts, oder auf einem Berg, der das stehende oder fließende Gewässer mit Wasser versorgt.

Steigt nun der Pegelstand infolge eines Wetterumschwungs rasch an, sind Messungen in sehr kurzen Zeitabständen wünschenswert und, falls die Änderungsrate des Pegels dies erforderlich macht, auch an die Leitstelle zu melden.

Diese Pegelstandänderung kann durch die Berücksichtigung der Wetterinformationen vorhergesagt werden, so dass die Messzeitpunkte entsprechend berechnet werden können.

In anderen Worten werden die Messintervalle an das aktuelle oder voraussichtlich zukünftige Wetter angepasst.

Somit kann die Häufigkeit der Abstandsmessung durch die Wetterprognosen beeinflusst werden, um Energie zu sparen und gleichzeitig zu gewährleisten, dass Pegelstandänderungen frühzeitig erkannt werden.

Die gemessenen Daten werden zu den notwendigen Zeitpunkten an die Leitstelle gesendet. Ist der Verbindungsaufbau zur Leitstelle erfolgt, können nach Übertragung der Messdaten die Wetterdaten oder die Zeitpunkte für zukünftige Messungen an das Messgerät übertragen werden. Somit kann nochmals Energie eingespart werden.

Bei einer Wettermeldung "Starkregen" kann dementsprechend die Messrate zum erwarteten Eintritt des Starkregens (oder ggf. auch etwas später, wenn nämlich mit einer entsprechenden Pegeländerung zu rechnen ist) erhöht werden. Ebenso bei zu erwartendem Hagelschlag oder starkem Schneefall. Auch ist es möglich, die Messrate zu erhöhen, wenn ein starker Temperaturanstieg zu erwarten ist, der zur Schneeschmelze führt, oder wenn der Abgang einer Lawine zu erwarten ist.

Ist das prognostizierte Ereignis (Starkregen, Hagelschlag, starker Schneefall, Lawinenabrutsch, Schneeschmelze) nicht eingetreten oder bereits erfolgt, kann die Messrate ggf. nach einer vorgegebenen Verzögerungszeit oder nach Unterschreitung eines bestimmten Pegels wieder verringert werden. Entsprechendes gilt auch für die Meldung an die Leitstelle.

Die auf diese Weise im Messgerät gesparte Energie kann für zusätzliche Messungen verwendet werden.

Da sich der Pegel eines Gewässers, beispielsweise eines Flusses oder eines Abwasserkanals, witterungsabhängig verändern kann, ist die Miteinbeziehung der Wetterinformation am Ort des Messgeräts bzw. strom-/bergaufwärts davon vorteilhaft, um die Messrate möglichst optimal einstellen zu können. Für derartige Pegel- bzw. Abstandsmessungen können auf die Einsatz- bzw. Umgebungsbedingungen angepasste Messgeräte verwendet werden, die unterschiedliche Messverfahren durchführen. Beispiele hierfür sind TDR-Geräte, Radar-Geräte, Ultraschall-Geräte, Hydrostatik-Geräte und Radiometrie-Geräte.

Diese Messgeräte können an Orten eingesetzt werden, bei denen keine Energieversorgung in unmittelbarer Nähe zur Verfügung steht. So kommen bei diesen entfernt gelegenen Messgeräten Batterie- oder Akkusysteme oder auch solarbetriebene Versorgungssysteme als Energiequelle zum Einsatz. Um einen Totalausfall der Batterie- oder Akkusysteme zu vermeiden, sollten diese rechtzeitig ausgetauscht oder nachgeladen werden. Da ein Austausch oft aufwändig ist und ein Nachladen der Akkus sich nicht immer automatisch ausführen lässt, ist der Energieverbrauch der Sensoren möglichst gering zu halten. Der Energieverbrauch kann durch eine Reduzierung der Messrate und der zwischen Sensor und Leitstelle ausgetauschten Datenmenge verringert werden.

Aufgrund der großen Entfernung zwischen Messgerät und Leitstelle kommen auch Messgeräte mit einem Funkmodul 120 zum Einsatz, welche über ein Funknetz, wie beispielsweise GSM, an die Leitstelle gekoppelt sind. Auch können internetbasierte Übertragungsprotokolle verwendet werden. Diese Funkmodule benötigen ebenfalls Energie. Der Energiebedarf der Funkmodule 120 kann deutlich größer sein als der Energiebedarf für die eigentliche Messung des Messgeräts. Deshalb ist vorgesehen, dass, falls möglich, weniger oft gesendet und empfangen wird als gemessen.

Beispielsweise wird der Pegelstand des Gewässers 108 viermal täglich (oder einmal täglich) gemessen, die Messwerte jedoch nur einmal täglich (oder alle zwei Tage) an die Leitstelle übermittelt. Bei der Übermittlung der Messwerte an die Leitstelle werden aktuelle Wetterdaten und die entsprechenden Wetterprognosen vom Sensor abgefragt. Alternativ kann der Sensor zukünftige Messzeitpunkte abfragen (die Auswertung der Wetterdaten erfolgt in diesem Falle also nicht im Sensor, sondern beispielsweise in der Leitstelle). Es ist auch möglich, diese Daten direkt von einem externen Dienst zu beziehen, der die Wetterdaten bereitstellt und ggf. auch deren Auswertung übernimmt. Diese Daten werden beispielsweise als XML-Datei von dem externen Dienst an die Leitstelle oder den Sensor bereitgestellt.

Aufgrund dieser Wetterprognosen oder Wettermeldungen passt die Leitstelle die Zeitpunkte für die Messungen des Sensors (also die Messintervalle) und die Sendeintervalle für den Datentransfer vom Sensor an die Leitstelle an. So wird beispielsweise der Pegel bei der Wetterwarnung "Starkregen" alle 30 Minuten gemessen und alle 80 Minuten werden die Messdaten an die Leitstelle übermittelt, zumindest falls sich der Pegelstand hinreichend geändert hat.

Für einige Anwendungen ist vorgesehen, dass die Wetterwarnung oder Wetterprognose im Vorfeld eine erhöhte Messrate auslöst und der Sensor selbst die relative Pegeländerung in einem bestimmten Zeitbereich berücksichtigt, um die Meldungen an die Leitstelle zeitlich zu steuern. Mit dieser Methode kann sichergestellt werden, dass der Sensor noch rechtzeitig mit der Messung beginnt, aber nicht unnötig viel Energie verbraucht, da er die Zeitpunkte für zukünftige Messungen sowie für die Übertragung der Messwerte selbständig an die Pegeländerungsrate anpasst.

Fig. 2 zeigt eine Messgeräteanordnung 100 gemäß einer weiteren beispielhaften Ausführungsform. Das Messgerät 101 weist eine Steuereinheit 105 sowie eine Funkschnittstelle 120 auf. Die entfernt zum Messgerät angeordnete Leitstelle 109 weist ebenfalls eine Steuereinheit 106 und eine Funkschnittstelle 121 auf. Darüber hinaus ist eine Wetterstation 110 bzw. ein externer Wetterdienst vorgesehen, die/der ebenfalls eine Steuereinheit 107 sowie eine Funkschnittstelle 122 aufweist.

Die Kommunikation zwischen dem Messgerät 101, der Leitstelle 109 und dem Wetterdienst bzw. der Wetterstation 110 kann über ein zelluläres Funknetzwerk oder beispielsweise das Internet erfolgen.

Bei dem Messgerät der Fig. 2 handelt es sich beispielsweise um ein berührungslos arbeitendes Füllstandradargerät.

Fig. 3 zeigt ein Flussdiagramm eines Verfahrens gemäß einer beispielhaften Ausführungsform. In Schritt 301 erfolgt die Erfassung von Wetterdaten am Ort und in der Umgebung des Messgeräts. Aus diesen Wetterdaten kann eine Wetterinformation, die das aktuelle oder das zukünftig zu erwartende Wetter am Ort des Messgeräts betrifft, berechnet werden (Schritt 302). In Schritt 303 wird dann aus dieser Wetterinformation, ggf. unter Berücksichtigung weiterer Informationen (Zeitpunkt für das Öffnen einer Staustufe, aktuelle Änderungsrate des Pegelstandes), der Zeitpunkt für eine zukünftige Messung berechnet.

Dieser Zeitpunkt wird dann in Schritt 304 an das Messgerät übermittelt und das Messgerät bestimmt in Schritt 305 unter Berücksichtigung der Historie bisheriger Messungen/Pegelstände den tatsächlichen Zeitpunkt für die nächste Messung. In Schritt 306 werden die erfassten Messdaten an die Leitstelle übermittelt, da das Feldgerät festgestellt hat, dass sich der Pegel im Vergleich zur vorherigen Messung doch deutlich geändert hat.

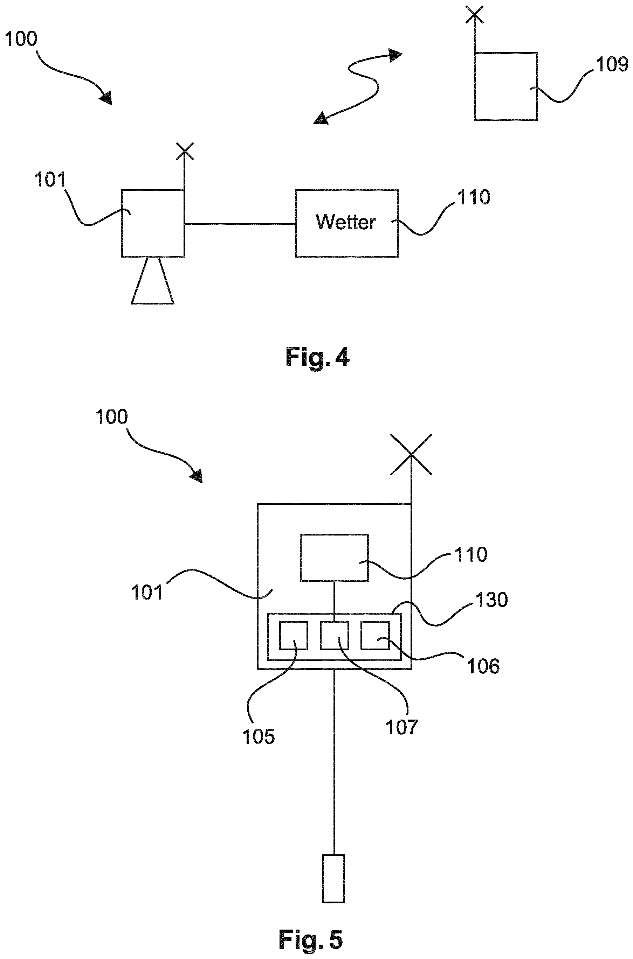

Fig. 4 zeigt eine Messanordnung 100 gemäß einer weiteren beispielhaften Ausführungsform. Das Messgerät 101 ist direkt an eine Wetterstation 110 angeschlossen, so dass es die Wetterinformation somit direkt von der Wetterstation 110 erhält und selber auswertet.
Fig. 5 zeigt eine weitere beispielhafte Ausführungsform der Messgeräteanordnung 100, die in diesem Fall lediglich aus dem Messgerät 101 besteht. Es ist eine zentrale Steuereinheit 130 vorgesehen, welche die Steuereinheiten 105, 106, 107 beinhaltet, so dass das Messgerät 101 sämtliche Datenerhebungen und Berechnungen selbstständig durchführen kann. Insbesondere weist das Feldgerät 101 eine darin integrierte Wetterstation 110 auf. Hierbei kann es sich beispielsweise um ein Barometer handeln.

## Patentansprüche

1. Messgeräteanordnung (100) mit einem Messgerät (101), welches zum Messen eines Füllstands oder eines Pegels eines Mediums (108) basierend auf einer Messung eines Abstandes des Messgeräts (101) zu dem Medium (108) ausgeführt ist, **dadurch gekennzeichnet, dass** die Messgeräteanordnung aufweist:
eine Steuereinheit (105, 106, 107), ausgeführt zum Berechnen eines Zeitpunkts für eine nächste Messung des Abstands des Messgerätes (101) zu dem Medium (108) unter Berücksichtigung einer aktuellen oder prognostizierten Wetterinformation, die das Wetter am Ort des Messgeräts betrifft;
wobei die Steuereinheit (105) ferner zum Bestimmen eines Zeitpunkts für eine Übertragung von Messdaten an eine Leitstelle unter Berücksichtigung der aktuellen oder prognostizierten Wetterinformation und unter Berücksichtigung einer zeitlichen Änderung des Abstandes des Messgeräts zu dem Medium ausgeführt ist.

2. Messgeräteanordnung (100) nach einem der vorhergehenden Ansprüche,
wobei die Steuereinheit (105) in dem Messgerät (101) integriert ist.

3. Messgeräteanordnung (100) nach Anspruch 1, weiter aufweisend:
eine Leitstelle (109), die entfernt zum Messgerät (101) angeordnet ist und zur Kommunikation mit dem Messgerät (101) ausgeführt ist;
wobei die Steuereinheit (106) in der Leitstelle (109) integriert ist.

4. Messgeräteanordnung (100) nach einem der vorhergehenden Ansprüche, weiter aufweisend:
eine Wetterstation (110), die zur Kommunikation mit dem Messgerät oder der Leitstelle (109) ausgeführt ist, zum Bereitstellen der aktuellen oder prognostizierten Wetterinformation an das Messgerät oder die Leitstelle.

5. Messgeräteanordnung (100) nach einem der vorhergehenden Ansprüche,
wobei die Steuereinheit (105, 106, 107) für das Berechnen des Zeitpunkts für die nächste Messung des Abstands auch eine Historie vergangener, vom Messgerät durchgeführter Abstandmessungen berücksichtigt.

6. Messgeräteanordnung (100) nach einem der Ansprüche 1 bis 2, aufweisend:
eine Leitstelle (109), die entfernt zum Messgerät (101) angeordnet ist und zur Kommunikation mit dem Messgerät (101) ausgeführt ist;
wobei der Zeitpunkt für die Übertragung der Messdaten an die Leitstelle nicht zwingend mit dem Zeitpunkt der letzten Messung korreliert.

7. Messgeräteanordnung (100) nach Anspruch 6,
wobei der Zeitpunkt für die Übertragung von Messdaten an die Leitstelle (109) von einer Änderungsrate des gemessenen Abstands (103) abhängig ist.

8. Verfahren zum Messen eines Füllstands oder eines Pegels eines Mediums (108) mit einem Messgerät (101), welches zum Messen des Füllstands oder des Pegels basierend auf einer Messung eines Abstandes des Messgeräts (101) zu dem Medium (108) ausgeführt ist, aufweisend die Schritte:
Berechnen eines Zeitpunkts für eine nächste Messung des Abstands des Messgeräts zu dem Medium (108) unter Berücksichtigung einer aktuellen oder prognostizierten Wetterinformation, die das Wetter am Ort des Messgeräts betrifft;
Messen des Abstandes zu dem Medium (108) an dem berechneten Zeitpunkt;
Bestimmen des Füllstandes oder des Pegels des Mediums (108) basierend auf dem gemessenen Abstand ; und
Bestimmen eines Zeitpunkts für eine Übertragung von Messdaten an eine Leitstelle unter Berücksichtigung der aktuellen oder prognostizierten Wetterinformation und unter Berücksichtigung einer zeitlichen Änderung des Abstandes des Messgeräts zu dem Medium.

9. Programmelement, das, wenn es auf einer Steuereinheit (105, 106, 107) einer Messgeräteanordnung (100) gemäß einem der Ansprüche 1 bis 7 ausgeführt wird, die Steuereinheit anleitet, die Schritte des Verfahrens nach Anspruch 8 durchzuführen.

10. Computerlesbares Medium, auf dem ein Programmelement nach Anspruch 9 gespeichert ist.

## Claims

1. A measurement device arrangement (100) with a measurement device (101) configured for measuring a fill level or a gauge of a medium (108) based on measuring a distance of the measurement device (101) to the medium (108), **characterized in that** the measurement device arrangment (100) comprises:
a control unit (105, 106, 107) configured for calculating a point in time for a next measurement of the distance of the measurement device (101) to the medium (108) taking account of current or predicted weather information relating to the weather at the location of the measurement device (101);
wherein the control unit (105) is further configured for determining a point in time for transmitting measured data to a control station (109), taking account of the current or predicted weather information and taking account of a temporal change of the distance of the measurement device (101) to the medium (108).

2. The measurement device arrangement (100) according to claim 1,
wherein the control unit (105) is integrated in the measurement device (101).

3. The measurement device arrangement (100) according to claim 1, further comprising:
a control station (109) which is arranged remote from the measurement device (101) and which is configured for communicating with the measurement device (101);
wherein the control unit (105) is integrated in the control station (109).

4. The measurement device arrangement (100) according to any of the preceding claims, further comprising:
a weather station (110) which is configured for communicating with the measurement device (101) or the control station (109), to provide the current or predicted weather information to the measurement device (101) or the control station (109).

5. The measurement device arrangement (100) according to any of the preceding claims,
wherein the control unit (105, 106, 107), to calculate the point in time for the next measurement of the distance, also takes account of an archive of past distance measurements carried out by the measurement device (101).

6. The measurement device arrangement (100) according to any of claims 1 and 2, comprising:
a control station (109) which is arranged remote from the measurement device (101) and which is configured for communicating with the measurement device (101);
wherein the point in time for transmitting the measured data to the control station (109) does not necessarily correlate with the point in time of the last measurement.

7. The measurement device arrangement (100) according to claim 6,
wherein the point in time for transmitting measured data to the control station (109) is dependent on a rate of change of the measured distance (103).

8. A method for measuring a fill level or a gauge of a medium (108) with a measurement device (108), which is configured for measuring the fill level or the gauge of the medium (108) based on measuring a distance of the measurement device (101) to the medium (108), the method comprising the steps of:
calculating a point in time for a next measurement of the distance of the measurement device (101) to the medium (108) taking account of current or predicted weather information relating to the weather at the location of the measurement device (101);
measuring the distance of the measurement device (101) to the medium (108) at the calculated point in time;
determining the fill level or the gauge of the medium (108) based on the measured distance; and
determining a point in time for transmitting measured data to a control station (109), taking account of the current or predicted weather information and taking account of a temporal change of the distance of the measurement device (101) to the medium (108).

9. A program element which, when executed on a control unit (105, 106, 107) of a measurement device arrangement (100) according to any of claims 1 to 7, instructs the control unit to carry out the steps of the method according to claim 8.

10. A machine-readable medium on which a program element according to claim 9 is stored.

## Revendications

1. Agencement d'appareil de mesure (100) comportant un appareil de mesure (101) adapté pour mesurer un niveau ou une profondeur d'un milieu (108) sur la base d'une mesure de distance entre l'appareil de mesure (101) et le milieu (108),
**caractérisé en ce que** l'agencement d'appareil de mesure comporte :
une unité de commande (105, 106, 107) adaptée pour calculer un instant pour une prochaine mesure de la distance entre l'appareil de mesure (101) et le milieu (108) en tenant compte d'une information météorologique actuelle ou prédite concernant les conditions météorologiques sur le lieu où se trouve l'appareil de mesure,
dans lequel l'unité de commande (105) est en outre adaptée pour déterminer un instant pour transmettre des données de mesure à un poste de commande en tenant compte de l'information météorologique actuelle ou prédite et en tenant compte d'une variation temporelle de la distance entre l'appareil de mesure et le milieu.

2. Agencement d'appareil de mesure (100) selon l'une des revendications précédentes,
dans lequel l'unité de commande (105) est intégrée dans l'appareil de mesure (101).

3. Agencement d'appareil de mesure (100) selon la revendication 1, comportant en outre :
un poste de commande (109) agencé à distance de l'appareil de mesure (101) et adapté pour communiquer avec l'appareil de mesure (101),
dans lequel l'unité de commande (106) est intégrée dans le poste de commande (109).

4. Agencement d'appareil de mesure (100) selon l'une des revendications précédentes, comportant en outre :
une station météorologique (110) adaptée pour communiquer avec l'appareil de mesure ou avec le poste de commande (109) afin de déterminer l'information météorologique actuelle ou prédite sur l'appareil de mesure ou sur le poste de commande.

5. Agencement d'appareil de mesure (100) selon l'une des revendications précédentes,
dans lequel l'unité de commande (105, 106, 107) tient également compte, pour le calcul de l'instant pour la prochaine mesure de distance, d'un historique de mesures de distance antérieures réalisées par l'appareil de mesure.

6. Agencement d'appareil de mesure (100) selon l'une des revendications 1 à 2, comportant :
un poste de commande (109) agencé à distance de l'appareil de mesure (101) et adapté pour communiquer avec l'appareil de mesure (101),
dans lequel l'instant pour la transmission des données de mesure au poste de commande n'est pas nécessairement corrélé à l'instant de la dernière mesure.

7. Agencement d'appareil de mesure (100) selon la revendication 6,
dans lequel l'instant pour la transmission de données de mesure au poste de commande (109) dépend d'un taux de variation de la distance (103) mesurée.

8. Procédé de mesure d'un niveau ou d'une profondeur d'un milieu (108) avec un appareil de mesure (101) adapté pour mesurer le niveau ou la profondeur sur la base d'une mesure de distance entre l'appareil de mesure (101) et le milieu (108), comportant les étapes consistant à :
calculer un instant pour une prochaine mesure de la distance entre l'appareil de mesure et le milieu (108) en tenant compte d'une information météorologique actuelle ou prédite concernant les conditions météorologiques sur le lieu où se trouve l'appareil de mesure,
mesurer la distance entre le milieu (108) et l'instant calculé,
déterminer le niveau ou la profondeur du milieu (108) sur la base de la distance mesurée, et
déterminer un instant pour transmettre des données de mesure à un poste de commande en tenant compte de l'information météorologique actuelle ou prédite et en tenant compte d'une variation temporelle de la distance entre l'appareil de mesure et le milieu.

9. Elément de programme qui, lorsqu'il est exécuté sur une unité de commande (105, 106, 107) d'un agencement d'appareil de mesure (100) selon l'une des revendications 1 à 7, ordonne à l'unité de commande d'exécuter les étapes du procédé selon la revendication 8.

10. Support lisible par ordinateur sur lequel est enregistré un élément de programme selon la revendication 9.
